# EUROPEAN PATENT SPECIFICATION

(11) **EP 2 208 343 B1**
(45) Date of publication and mention of the grant of the patent: **15.08.2018**
(21) Application number: 08793762.9
(22) Date of filing: 11.09.2008
(51) Int. Cl.: H04N 5/46

(54) **TUNER AND BROADCAST RECEIVER HAVING THE SAME**
TUNER UND RUNDFUNKEMPFÄNGER DAMIT
SYNTONISEUR ET RÉCEPTEUR DE RADIODIFFUSION ÉQUIPÉ D'UN TEL SYNTONISEUR

(30) Priority: 12.09.2007 KR 20070092510
(43) Date of publication of application: 21.07.2010
(73) Proprietor: LG Innotek Co., Ltd., Seoul, 04637 (KR)
(72) Inventor: AHN, Seung Gwang, Gwangju 506-782 (KR)
(74) Representative: DREISS Patentanwälte PartG mbB
(86) International application number: PCT/KR2008/005370
(87) International publication number: WO 2009/035273

(56) References cited:
- EP-A1- 1 455 527
- KR-A- 19990 007 024
- KR-A- 20020 001 408
- KR-A- 20020 014 080
- KR-B1- 100 755 595
- US-A1- 2006 001 779
- US-A1- 2007 146 558

## Description

### Technical Field

The present disclosure relates to a broadcast receiver having a tuner.

### Background Art

As broadcasting media are digitalized, a terrestrial broadcasting service and a satellite broadcasting service have been launched. Recently, a cable broadcasting service has also been digitalized. The digitalization of broadcasting signals will accelerate a convergence service combining broadcasting, computing, and communication as the media using compression technology spreads widely. The digitalization of the broadcasting signals makes it possible to internationalize the media, realize a multi-channel, and provide a variety of data services.

US 2006/0001779 A1 discloses a tv receiver including a frequency conversion circuit, an analog-to-digital converter, a signal processor and a signal output circuit. KR 2002 0014080 A discloses a digital broadcasting receiver provided to automatically adapt the frequency of carrier waves by renewing the coefficiency of a matched filter only in a carrier wave adaptation period.

### Disclosure of Invention Technical Problem

Embodiments provide a broadcast receiver having a tuner that is designed to process signals that are modulated through difference modes.

Embodiments provide a broadcast receiver having a tuner that is designed to process not only a digital terrestrial broadcasting signal but also a digital cable broadcasting signal.

Embodiments provide a broadcast receiver having a tuner that is designed to convert one of a digital terrestrial broadcasting signal and a digital cable broadcasting signal into an intermediate frequency and demodulate the intermediate frequency.

### Technical Solution

An embodiment provides a broadcast receiver comprising; a tuner unit converting one of broadcasting signals, which is selectively input, into a signal having an intermediate frequency, a demodulator demodulating the converted signal having the intermediate frequency in accordance with a broadcasting mode and outputting the demodulated signal as a transport stream, and a decoder decoding the transport stream output from the demodulator.

### Advantageous Effects

According to the embodiments, since different broadcasting signals are processed by one tuner, the number of tuner can be reduced.

In addition, since more than two signals can be processed by one tuner, the number of tuner and cables can be reduced and a radio frequency (RF) splitter and a switch for transport stream can be omitted.

Further, a size of a set such as a TV set, a set-top box, a digital versatile disk (DVD) player, or a personal video recorder (PVR), in which a tuner is mounted, can be reduced.

Furthermore, since different signals can be selectively received and reproduced in accordance with a broadcasting receiving environment, the user convenience can be improved.

### Brief Description of the Drawings

Fig. 1 is a schematic diagram of a broadcast receiver according to a first embodiment.
Fig. 2 is a schematic diagram of a broadcast receiver according to a second embodiment.
Fig. 3 is a schematic diagram of a broadcast receiver according to a third embodiment.
Fig. 4 is a schematic diagram of a broadcast receiver according to a fourth embodiment.

### Best Mode for Carrying Out the Invention

Reference will now be made in detail to the embodiments of the present disclosure, examples of which are illustrated in the accompanying drawings.

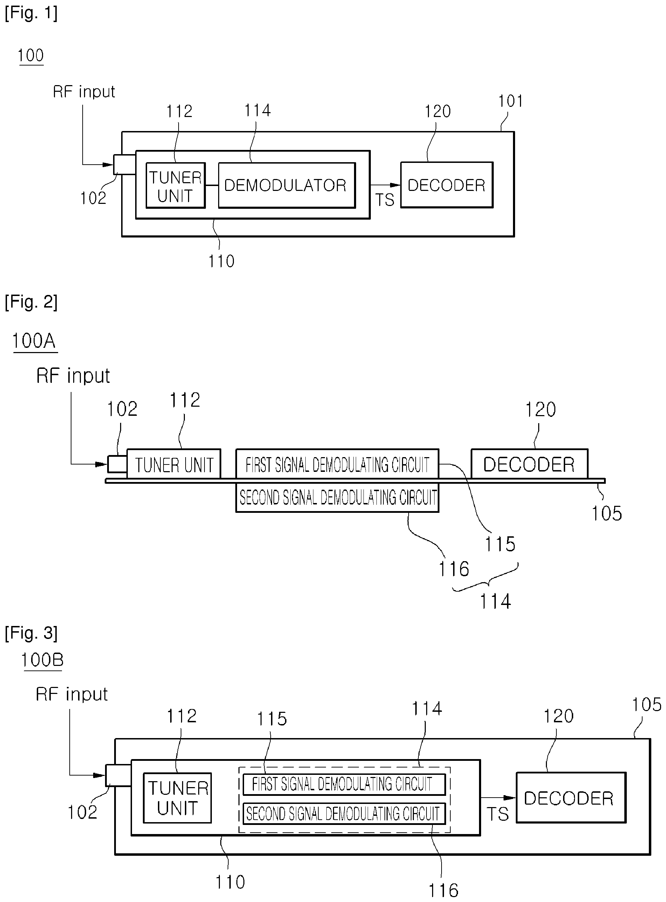

Fig. 1 is a schematic diagram of a broadcast receiver according to a first embodiment.

Referring to Fig. 1, a broadcast receiver 100 comprises a tuner 110 and a decoder 120. The tuner 110 comprises a tuner unit 112 and a demodulator 114.

The broadcast receiver 100 selectively receives modulated signals, which are modulated in different modes, in a set 101, and processes and decodes the received signals. Here, the set 101 may be a TV set, a set-top box, a DVD (DEV-RW, DVD+RW, and the like), a PVR, and the like.

The tuner 110 receives one (RF input) of signals having different modulation modes through an input terminal 102. That is, the tuner 110 receives one of two different digital broadcasting signals, which is selected by a user.

The tuner unit 112 of the tuner 110 selectively receives at least two signals that are modulated through different modes and converts the received signal into a signal having an intermediate frequency. The demodulator 114 demodulates the signal having the intermediate frequency. That is, the tuner unit 112 receives one of, for example, first and second signals and converts the received signal into a signal having the intermediate frequency. The demodulator 114 demodulates the signal having the intermediate frequency in accordance with a broadcasting mode of the received signal.

The first signal is a digital terrestrial broadcasting mode and the second signal is a digital cable broadcasting signal. The digital broadcasting signal is a signal that is modulated through an orthogonal frequency division multiplexing (OFDM) mode and the digital cable broadcasting signal is a signal that is modulated through a quadrature amplitude modulation (QAM) mode. Frequency bands of the first and second signals are same within a predetermined range (e.g., 44-860 MHz). The frequency bands may vary.

The tuner unit 112 may comprise an amplifier (not shown), a filter (not shown), and a mixer oscillator phase looked loop integrated circuit (MOPLL IC) (not shown). The amplifier is provided to reduce noise and enhance receiving sensitivity. The amplifier may be a low noise amplifier (LNA). The filter may be a band pass filter (BPF). The MOPLL IC comprises a PLL, an OSC, and a mixer. The PLL outputs a reference frequency and the OSC generates a local frequency. The mixer mixes the received signal and the local frequency with each other to output an intermediate frequency. The structure and operation of the tuner unit 112 may vary.

The tuner unit 112 is a single unit but processes at least two broadcasting signals. Therefore, the number of the tuner can be reduced. When the number of the tuner unit 112 is reduced, the number of cables connected to the tuner unit 112 can be reduced. In addition, the RF splitter disposed on a front end of the tuner unit 112 can be omitted.

The demodulator 114 comprises different demodulating circuits. The demodulator 114 demodulates the intermediate frequency converted by the tuner unit 112 in accordance with the broadcasting mode of the signals input and outputs the demodulated intermediate frequency as a transport stream.

The tuner 110 may be a network interface module (NIM) tuner or a half NIM tuner. The NIM tuner comprises the tuner unit 112 and the demodulator 114. The half NIM tuner may not comprise the demodulator. Description will be exemplarily made on the NIM tuner.

The transport stream demodulated by the demodulator 114 is input to the decoder 120. The decoder 120 decodes the transport stream and outputs the decoded transport stream as a video signal, an audio signal, or the like. At this point, the transport stream may be, for example, an MPEG-2 transport stream. The video signal decoded by the decoder 120 may be a composite video banking synchronization (CVBS) signal and the audio signal decoded by the decoder 120 may be a stero signal, a dual signal, and a mono signal.

The decoder 120 may communicate with the tuner 110 through serial communication (I2C: SCL, SDA).

Even when one of the signals that are modulated through difference modes is input, the broadcast receiver 110 converts the input signal into a signal having the intermediate frequency, demodulates the converted signal having the intermediate frequency using a demodulation mode of the corresponding signal, and decodes the demodulated signal.

Fig. 2 is a schematic diagram of a broadcast receiver according to a second embodiment. In the second embodiment, parts identical to those of the first embodiment will not be described.

Referring to Fig. 2, a broadcast receiver 100A comprises a tuner unit 112, a demodulator 114, a decoder 120, and a board 105.

The tuner unit 112 receives one of broadcasting signals through a input terminal 102. At this point, the tuner unit 112 may receive a first signal that is modulated through a first mode or a second signal that is modulated through a second mode. The first signal may be a digital terrestrial broadcasting signal that is modulated through an OFDM mode and the second signal may be a digital cable broadcasting signal that is modulated through a QAM mode.

The tuner unit 112 selectively receives one of the first and second signals and converts the received signal into a signal having an intermediate frequency.

The demodulator 114 comprises first and second signal demodulating circuits 115 and 116. When the first signal is input through the tuner unit 112, the first signal demodulating circuit 115 demodulates the first signal using a first signal modulating mode. When the second signal is input through the tuner unit 112, the second signal demodulating circuit 116 demodulates the second signal using a second signal modulating mode. That is, the first signal demodulating circuit 115 demodulates the modulated signal using the OFDM mode and the second signal demodulating circuit 116 demodulates the modulated signal using the QAM mode.

Here, a controller (not shown) controls the first and second signal demodulating cir cuits 115 and 116 in accordance with the signal input to the tuner unit 112. At this point, when the first signal is input to the tuner unit 112, the controller activates the first signal demodulating circuit 115. When the second signal is input to the tuner unit 112, the controller deactivates the first signal demodulating circuit 115. On the contrary, when the second signal is input to the tuner unit 112, the controller activates the second signal demodulating circuit 116. When the first signal is input to the tuner unit 112, the controller deactivates the second signal demodulating circuit 116.

The decoder 120 decodes the transport stream output from one of the first and second signal demodulating circuits 115 and 116 and outputs the decoded transport stream as a video or audio signal.

The board 105 functions as an interface between the components. The tuner unit 112, first signal demodulating circuit 115, and decoder 120 are disposed on a top surface the board 105 and the second signal demodulating circuit 116 is disposed on an undersurface of the board 105. As the top and under surfaces of the board 105 are used to dispose the components, the set space can be efficiently used.

Further, the first and second signal demodulating circuits 115 and 116 are commonly connected to a common port of the decoder 120, the decoder 120 can receive the transport stream through the common port even when the first and second signal demodulating circuits 115 and 116 are not connected to respective ports. Accordingly, there is no need to provide a separate switch for converting and transferring the transport stream on the front end of the decoder 120.

Fig. 3 is a schematic diagram of a broadcast receiver according to a third embodiment. In the third embodiment, parts identical to those of the first embodiment will not be described.

Referring to Fig. 3, a broadcast receiver 100B comprises a first signal demodulating circuit 115, a second signal demodulating circuit 116, and a decoder 120, which are mounted on a top surface of a board 105.

As all of the components of the broadcast receiver 100B are disposed on the top surface of the board 105, the number of processes for disposing the components on the board 105 can be reduced.

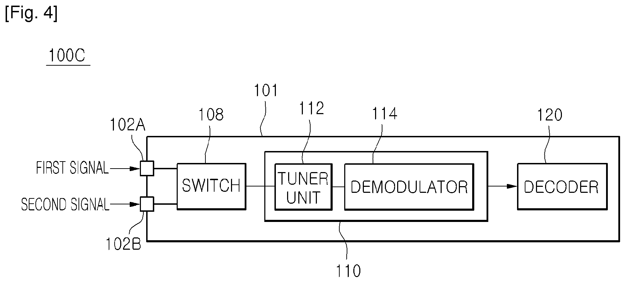

Fig. 4 is a schematic diagram of a broadcast receiver according to a fourth embodiment. In the fourth embodiment, parts identical to those of the first embodiment will not be described.

Referring to Fig. 4, a broadcast receiver 100C comprises a first input terminal 102A, a second input terminal 102B, a switch 108, a tuner 110, and a decoder 120.

A terrestrial signal that is a first signal may be input through the first input terminal 102A and a cable signal that is a second signal may be input through the second input terminal 102B. The terrestrial signal is a digital broadcasting signal of an OFDM mode and the cable signal is a digital broadcasting signal of a QAM mode. When the first and second signals are input through the first and second input terminals 102A and 102B, the switch selects and outputs one of the first and second signals.

The tuner 110 comprises a tuner unit 112 that converts the signal input through the switch 108 into a signal having an intermediate frequency and the demodulator 114 demodulates the signal having the intermediate frequency in accordance with a broadcasting mode and outputs a transport stream.

In the fourth embodiment, even when two different signals are simultaneously input to a set 101, only one of the signals is selected by the switch 108 and the selected signal is transferred to the tuner 110. The tuner 110 processes the transferred signal.

According to the embodiments of the present disclosure, the cable broadcasting signal and the terrestrial broadcasting signal that are input through the input terminal are converted into signals each having the intermediate frequency and the converted signals are demodulated by the two demodulating circuits 114 in response to the respective digital terrestrial broadcasting signal and the digital cable broadcasting signal. The demodulated signals are decodes by the decoder 120 and output. That is, the two different signals (the digital terrestrial broadcasting signal and the digital cable broadcasting signal) can be processed by one tuner unit 112. Therefore, the structure of the set can be simplified, slimmed, and minimized.

Although embodiments have been described with reference to a number of illustrative embodiments thereof, it should be understood that the embodiments are provided for descriptive purposes and not for limitation.

### Industrial Applicability

Embodiments can provide a tuner that can process signals that are modulated through different modes.

Embodiments can provide a tuner that can selectively process the terrestrial and cable signals and can be used for a TV, DVD player, PVR, and set-top box.

## Claims

1. A broadcast receiver comprising:
a tuner (110) including a tuner unit (112) converting one of broadcasting signals, which is selectively input, into a signal having an intermediate frequency; and a demodulator (114) demodulating the converted signal having the intermediate frequency through a demodulation mode of the input signal ;
a switch (108) that is disposed on a front end of the tuner (110) to select one of the broadcasting signals input through a plurality of input terminals (102A, 102B); and
a decoder (120) decoding a transport stream output from the tuner (110),
wherein the tuner unit (112) converts the signal input through the switch (108) into a signal having the intermediate frequency in accordance with a broadcasting mode and outputs the transport stream,
wherein the demodulator (114) comprises a first signal demodulating circuit (115) demodulating a first signal and a second signal demodulating circuit (116) demodulating a second signal,
wherein the tuner unit (112) is a single unit and converts one of a digital terrestrial broadcasting signal of an orthogonal frequency division multiplexing mode and a digital cable broadcasting signal of a quadrature amplitude modulation mode into the signal having the intermediate frequency,
**characterized by**:
when the first and second signal are input through the first and second input terminals (102A and 102B), the switch (108) selects and outputs one of the first and second signals,
wherein the first and second demodulating circuits (115, 116) are commonly connected to a common port of the decoder (120),
wherein the decoder (120) receives the transport stream through the common port,
comprising a board (105) on which the tuner unit (112), modulator (114), and decoder (115) are mounted, wherein the first demodulating circuit (115) is disposed on a top surface of the board (105) and the second demodulating circuit (116) is disposed on an under surface of the board (105),
comprising a controller controls the first and the second demodulating circuit (115 and 116) in accordance with the signal input to the tuner unit (112),
wherein
when the first signal is input to the tuner unit (112), the controller activates the first signal demodulating circuit (115) disposed on the top surface of the board (105) and deactivates the second signal demodulating circuit (116) disposed on the under surface of the board (105), and
when the second signal is input to the tuner unit (112), the controller activates the second signal demodulating circuit (116) disposed on the under surface of the board (105) and deactivates the first signal demodulating circuit (116) disposed on the top surface of the board (105).

2. The broadcast receiver according to claim 1, comprising a single input terminal is provided on a front end of the tuner unit and one of the digital terrestrial broadcasting signal and the digital cable broadcasting signal is input through the input terminal of the tuner unit (112).

3. The broadcast receiver according to claim 1 or 2, wherein the digital terrestrial broadcasting signal is a signal of an orthogonal frequency division multiplexing mode and the digital cable broadcasting signal is a signal of an quadrature amplitude modulation mode.

4. The broadcast receiver according to any one of claims 1 to 3, wherein a video signal decoded by the decoder (120) is a composite video banking synchronization (CVBS) signal.

5. The broadcast receiver according to any one of claims 1 to 4, wherein the decoder (120) communicates with the tuner (110) through serial communication.

6. The broadcast receiver according to any one of claims 1 to 5, wherein the tuner unit (112) and the modulator (114) are provided in the form of network interface module (NIM) type tuners.

7. The broadcast receiver according to any one of claim 1 or 6, wherein a frequency bans of the first and second signals are same within a range of 44-860MHz.

8. The broadcast receiver according to any one of claims 1 to 7, wherein the tuner unit (112) comprises an amplifier, a filter, and a mixer oscillator phase looked loop integrated circuit.

## Patentansprüche

1. Rundfunkempfänger, Folgendes umfassend:
einen Tuner (110), einschließlich einer Tunereinheit (112), die eines von Rundfunksignalen, das selektiv eingegeben wird, in ein Signal umwandelt, das eine Zwischenfrequenz aufweist; und eines Demodulators (114), der das umgewandelte Signal mit der Zwischenfrequenz durch einen Demodulationsmodus des Eingabesignals demoduliert;
einen Schalter (108), der an einem vorderen Ende des Tuners (110) angeordnet ist, um eines der durch mehrere Eingangsanschlüsse (102A, 102B) eingegebenen Rundfunksignale auszuwählen; und
einen Decoder (120), der einen von dem Tuner (110) ausgegebenen Transportstream decodiert,
wobei die Tunereinheit (112) das durch den Schalter (108) ausgegebene Signal in ein Signal mit der Zwischenfrequenz gemäß einem Rundfunkmodus umwandelt und den Transportstream ausgibt,
wobei der Demodulator (114) einen ersten Signal demodulierenden Schaltkreis (115), der ein erstes Signal demoduliert, und einen zweiten Signal demodulierenden Schaltkreis (116), der ein zweites Signal demoduliert, umfasst,
wobei die Tunereinheit (112) eine einzige Einheit ist und ein digitales terrestrisches Rundfunksignal mit einem orthogonalen Frequenzmultiplexmodus oder ein digitales Kabelrundfunksignal mit einem
Quadraturamplitudenmodulationsmodus in ein Signal mit der Zwischenfrequenz umwandelt,
**dadurch gekennzeichnet, dass**:
wenn das erste und das zweite Signal durch den ersten und den zweiten Eingangsanschluss (102A und 102B) eingegeben werden, der Schalter (108) das erste oder das zweite Signal auswählt und ausgibt,
wobei der erste und der zweite demodulierende Schaltkreis (115, 116) gemeinsam mit einem gemeinsamen Anschluss des Decoders (120) verbunden sind,
wobei der Decoder (120) den Transportstream durch den gemeinsamen Anschluss empfängt,
umfassend eine Platine (105), auf der die Tunereinheit (112), der Modulator (114) und der Decoder (115) gelagert sind, wobei der erste demodulierende Schaltkreis (115) auf einer oberen Oberfläche der Platine (105) angeordnet ist und der zweite demodulierende Schaltkreis (116) auf einer unteren Oberfläche der Platine (105) angeordnet ist,
umfassend eine Steuervorrichtung, die den ersten und den zweiten demodulierenden Schaltkreis (115 und 116) gemäß dem in die Tunereinheit (112) eingegebenen Signal steuert,
wobei, wenn das erste Signal in die Tunereinheit (112) eingegeben wird, die Steuervorrichtung den ersten Signal demodulierenden Schaltkreis (115), der auf der oberen Oberfläche der Platine (105) angeordnet ist, aktiviert und den zweiten Signal demodulierenden Schaltkreis (116), der auf der unteren Oberfläche der Platine (105) angeordnet ist, deaktiviert, und
wobei, wenn das zweite Signal in die Tunereinheit (112) eingegeben wird, die Steuervorrichtung den zweiten Signal demodulierenden Schaltkreis (116), der auf der unteren Oberfläche der Platine (105) angeordnet ist, aktiviert und den ersten Signal demodulierenden Schaltkreis (116), der auf der oberen Oberfläche der Platine (105) angeordnet ist, deaktiviert.

2. Rundfunkempfänger nach Anspruch 1, umfassend einen einzigen Eingangsanschluss, der an einem vorderen Ende der Tunereinheit bereitgestellt ist, und das digitale terrestrische Rundfunksignal oder das digitale Kabelrundfunksignal durch den Eingangsanschluss in die Tunereinheit (112) eingegeben wird.

3. Rundfunkempfänger nach Anspruch 1 oder 2, wobei das digitale terrestrische Rundfunksignal ein Signal mit einem orthogonalen Frequenzmultiplexmodus ist und das digitale Kabelrundfunksignal ein Signal mit einem Quadraturamplitudenmodulationsmodus ist.

4. Rundfunkempfänger nach einem der Ansprüche 1 bis 3, wobei ein von dem Decoder (120) decodiertes Videosignal ein Farb-Bild-Austast-Synchron (*composite video blanking synchronization* - CVBS)-Signal ist.

5. Rundfunkempfänger nach einem der Ansprüche 1 bis 4, wobei der Decoder (120) mit dem Tuner (110) durch serielle Kommunikation kommuniziert.

6. Rundfunkempfänger nach einem der Ansprüche 1 bis 5, wobei die Tunereinheit (112) und der Modulator (114) in der Form von netzschnittstellenmodul (*network interface module* - NIM)artigen Tunern bereitgestellt werden.

7. Rundfunkempfänger nach einem der Ansprüche 1 oder 6, wobei ein Frequenzband des ersten und des zweiten Signals in einem Bereich von 44-860 MHz dasselbe ist.

8. Rundfunkempfänger nach einem der Ansprüche 1 bis 7, wobei die Tunereinheit (112) einen Verstärker, einen Filter und eine Mischschaltung mit einem eingebauten Phasenregelschleifenoszillator umfasst.

## Revendications

1. Récepteur de radiodiffusion comprenant:
un syntoniseur (110) comprenant une unité de syntonisation (112) qui convertit l'un des signaux de radiodiffusion, qui est entré de manière sélective, en un signal ayant une fréquence intermédiaire; et un démodulateur (114) qui démodule le signal converti ayant la fréquence intermédiaire par l'intermédiaire d'un mode de démodulation du signal entré;
un commutateur (108) qui est placé sur une extrémité avant du syntoniseur (110) afin de sélectionner l'un des signaux de radiodiffusion entré par l'intermédiaire d'une pluralité de terminaux d'entrée (102A, 102B); et
un décodeur (120) qui décode un flux de transport qui sort du syntoniseur (110),
dans lequel l'unité de syntonisation (112) convertit le signal entré par l'intermédiaire du commutateur (108) en un signal ayant la fréquence intermédiaire en fonction du mode de radiodiffusion et sort le flux de transport,
dans lequel le démodulateur (114) comprend un premier circuit de démodulation de signal (115) qui démodule un premier signal et un second circuit de démodulation de signal (116) qui démodule un second signal,
dans lequel l'unité de syntonisation (112) est une unité unique et convertit l'un d'un signal de radiodiffusion numérique terrestre d'un mode de multiplexage par répartition en fréquences orthogonal et d'un signal de radiodiffusion numérique par câble d'un mode de modulation d'amplitude en quadrature en le signal ayant la fréquence intermédiaire,
**caractérisé en ce que**:
lorsque le premier signal et le second signal sont entrés par l'intermédiaire des premier et second terminaux d'entrée (102A et 102B), le commutateur (108) sélectionne et sort l'un des premier signal et second signal,
dans lequel les premier et second circuits de démodulation (115, 116) sont communément connectés à un port commun du décodeur (120),
dans lequel le décodeur (120) reçoit le flux de transport par l'intermédiaire du port commun,
il comprend une carte (105) sur laquelle sont montés l'unité de syntonisation (115), le modulateur (114) et le décodeur (115), dans lequel le premier circuit de démodulation (115) est placé sur une surface supérieure de la carte (105) et le second circuit de démodulation (116) est placé sur une surface inférieure de la carte (105),
il comprend un contrôleur qui contrôle le premier et le second circuits de démodulation (115 et 116) en fonction du signal entré dans l'unité de syntonisation (112),
dans lequel
lorsque le premier signal est entré dans l'unité de syntonisation (112), le contrôleur active le premier circuit de démodulation de signal (115) placé sur la surface supérieure de la carte (105) et désactive le second circuit de démodulation de signal (116) placé sur la surface inférieure de la carte (105), et
lorsque le second signal est entré dans l'unité de syntonisation (112), le contrôleur active le second circuit de démodulation de signal (116) placé sur la surface inférieure de la carte (105) et désactive le premier circuit de démodulation de signal (115) placé sur la surface supérieure de la carte (105).

2. Récepteur de radiodiffusion selon la revendication 1, dans lequel un terminal d'entrée unique est placé sur une extrémité avant de l'unité de syntonisation et l'un du signal de radiodiffusion numérique terrestre et du signal de radiodiffusion numérique par câble est entré par l'intermédiaire du terminal d'entrée de l'unité de syntonisation (112).

3. Récepteur de radiodiffusion selon la revendication 1 ou 2, dans lequel le signal de radiodiffusion numérique terrestre est un signal dans un mode de multiplexage par répartition en fréquences orthogonal et le signal de radiodiffusion numérique par câble est un signal dans un mode de modulation d'amplitude en quadrature.

4. Récepteur de radiodiffusion selon l'une quelconque des revendications 1 à 3, dans lequel un signal vidéo décodé par le décodeur (120) est un signal vidéo composite d'effacement et de synchronisation (CVBS).

5. Récepteur de radiodiffusion selon l'une quelconque des revendications 1 à 4, dans lequel le décodeur (120) communique avec le syntoniseur (110) par l'intermédiaire d'une communication sérielle.

6. Récepteur de radiodiffusion selon l'une quelconque des revendications 1 à 5, dans lequel l'unité de syntonisation (112) et le modulateur (114) sont fournis sous la forme de syntonisateurs du type module d'interface réseau (NIM).

7. Récepteur de radiodiffusion l'une quelconque des revendications 1 à 6, dans lequel les bandes de fréquence du premier signal et du second signal sont les mêmes dans une fourchette de 44 à 860 MHz.

8. Récepteur de radiodiffusion selon l'une quelconque des revendications 1 à 7, dans lequel l'unité de syntonisation (112) comprend un amplificateur, un filtre, et un circuit intégré à boucle à verrouillage de phase de mélangeur oscillateur.
